# EUROPÄISCHE PATENTSCHRIFT

(11) **EP 2 569 181 B1**
(45) Veröffentlichungstag und Bekanntmachung des Hinweises auf die Patenterteilung: **16.07.2014**
(21) Anmeldenummer: 11719532.1
(22) Anmeldetag: 10.05.2011
(51) Int. Cl.: B60K 26/02, G05G 5/03, G05G 1/30

(54) **FAHRPEDALEINHEIT FÜR KRAFTFAHRZEUGE**
ACCELERATOR PEDAL UNIT FOR MOTOR VEHICLES
ENSEMBLE DE PÉDALE D'ACCÉLÉRATION

(30) Priorität: 06.10.2010 DE 102010042037; 11.05.2010 DE 102010020242
(43) Veröffentlichungstag der Anmeldung: 20.03.2013
(73) Patentinhaber: Conti Temic Microelectronic GmbH, 90411 Nürnberg (DE)
(72) Erfinder: ZELL, Andreas, 90411 Nürnberg (DE); LEONE, Carmelo, 85354 Freising (DE); DUCA, Mihai, R-550403 Sibiu (RO); DRAGOI, Ciprian, R-557261 Selimbar (RO); SZASZ, Mihaly, R-547055 Bahnea (RO)
(74) Vertreter: Brand, Markus
(86) Internationale Anmeldenummer: PCT/EP2011/057514
(87) Internationale Veröffentlichungsnummer: WO 2011/141459

(56) Entgegenhaltungen:
- WO-A1-2005/105508
- DE-A1- 10 324 374
- DE-A1-102004 025 829
- US-A1- 2005 016 318

## Beschreibung

Die vorliegende Erfindung betrifft eine Fahrpedaleinheit für Kraftfahrzeuge, wobei eine durch eine entsprechende Betätigungskraft herbeigeführte Lageänderung der Pedalplatte gegenüber seiner Ausgangslage entgegen einer Rückstellkraft einer Rückstellfeder zu einer Erhöhung der Antriebskraft des Motors führt und bei nachlassender Betätigungskraft die Rückstellkraft der Rückstellfeder die Pedalplatte in Richtung seiner Ausgangslage zurückbefördert, wobei ein fremdansteuerbarer elektromechanischer Aktuator derart angeordnet ist, dass eine zusätzliche Rückstellkraft auf die Pedalplatte einstellbar ist.

Bei modernen Kraftfahrzeugen besteht generell das Problem, dass der Fahrzeugführer mit vielen Informationen seines Kraftfahrzeugs versorgt wird. Diese Reizüberflutung des Fahrzeugführers durch akustische und optische Signale führt zu einer Ablenkung vom Verkehr. Infolgedessen neigt der Fahrzeugführer dazu, die Signale zu überhören oder zu ignorieren oder er kann sie nicht mehr der Ursache zuordnen. Eine Fahrpedaleinheit der eingangs genannten Gattung vermeidet alle Nachteile optischer und akustischer Systeme: Es ist eine geeignete Mensch-Maschinen-Schnittstelle für Längsdynamik-Funktionen (Abstandsinformation, Geschwindigkeitsbegrenzung und -regelung) sowie zur Anzeige von Gefahrenhinweisen.

Die passive Pedalkennlinie eines Fahrpedals weist in der Regel eine Hysterese auf. Aus der gattungsbildenden WO2005/105508A1 sind ein Verfahren und eine Vorrichtung zur Erzeugung einer Pedalkennlinie bekannt. Bei der vorbekannten Vorrichtung wird vorgeschlagen, die Hysterese durch den elektromechanischen Aktuator zu erzeugen. Dazu muss dann aber der elektromechanische Aktuator bei jeder Betätigung des Fahrpedals angesteuert werden und andererseits muss bei der Erzeugung einer zusätzlichen Rückstellkraft durch den elektromechanischen Aktuator eine Überlagerungsregelung berechnet werden.

Der vorliegenden Erfindung liegt daher die Aufgabe zugrunde, eine Fahrpedaleinheit der eingangs genannten Gattung dahingehend zu verbessern, dass sich die Kräfte der passiven Pedalkennlinie und des elektromechanischen Aktuators nicht gegenseitig beeinflussen.

Erfindungsgemäß wird diese Aufgabe durch eine Vorrichtung mit den Merkmalen des Patentanspruchs 1 gelöst.

Vorteilhafte Weiterbildungen sind den Unteransprüchen entnehmbar.

In einer vorteilhaften Weiterbildung des Erfindungsgegenstandes ist vorgesehen, dass die Hysterese-Mittel als Reib-Element und mit dem Reib-Element zusammenwirkender Reibfläche ausgebildet sind, wobei die Reibfläche mit der Pedalplatte verbunden ist, während das Reib-Element aus dem Kraftfluss zwischen der Pedalplatte und dem elektromechanischen Aktuator entkoppelt ist.

In einer weiteren vorteilhaften Weiterbildung ist das Reibelement um eine Achse beweglich angeordnet, die sich parallel zur Achse der Reibfläche befindet. Dazu ist das Reibelement schwenkbar um einen Achsbolzen angeordnet, wobei der Achsbolzen in einem Gehäuse der Fahrpedaleinheit befestigt ist.

In einer ersten Alternative ist der elektromechanische Aktuator als linearer Hubmagnet ausgebildet, dessen Stößel auf einer nockenartigen Kurvenscheibe aufliegt, wobei die Kurvenscheibe mittels eine Übertragungselements von der Pedalplatte betätigbar ist.

Eine vorteilhafte Weiterbildung sieht vor, dass die nockenartige Kurvenscheibe mindestens einen Magneten trägt, dessen Bewegung von einem Sensor ermittelbar ist.

Bei einer zweiten alternativen Ausführungsform ist der elektromechanische Aktuator als regelbarer Elektromotor ausgebildet, der eine Drehfeder gegen einen Auflagepin vorspannt, wobei ein mit der Pedalplatte verbundener Hebelarm an dem Auflagepin anliegt.

Eine vorteilhafte Weiterbildung sieht vor, dass der Hebelarm mindestens einen Magneten trägt, dessen Bewegung von einem Sensor ermittelbar ist.

Bei einer dritten alternativen Ausführungsform ist der elektromechanische Aktuator als reversibler Elektromotor ausgebildet, auf dessen Motorwelle ein vorgespanntes Band liegt, das einerseits über eine vorgespannte Feder mit einem Gehäuse der Fahrpedaleinheit und andererseits mit einer Kurvenscheibe verbunden ist, wobei die Kurvenscheibe mittels eine Übertragungselements von der Pedalplatte betätigbar ist.

Bei allen alternativen Ausführungsformen ist vorgesehen, dass die zusätzliche Rückstellkraft den maximalen Hub der Pedalplatte begrenzt, Kraftimpulse oder Vibrationen auf die Pedalplatte erzeugt.

Die Erfindung wird nachfolgend anhand dreier Ausführungsbeispiele im Zusammenhang mit der beiliegenden Zeichnung näher erläutert. In der Zeichnung zeigen:
- Fig. 1: eine Schnittdarstellung eines ersten Ausführungsbeispiels der erfindungsgemäßen Fahrpedaleinheit;
- Fig. 2: eine Draufsicht in Teil-Schnittdarstellung der Fahrpedaleinheit aus Fig. 1;
- Fig. 3: eine Pedalkennlinie;
- Fig. 4: eine weitere Schnittdarstellung des ersten Ausführungsbeispiels aus Fig. 1;
- Fig. 5: eine dreidimensionale Darstellung eines zweiten Ausführungsbeispiels der erfindungsgemäßen Fahrpedaleinheit;
- Fig. 6a,b: zwei Teilansichten ausgesuchter Bauteile der Fahrpedaleinheit aus Fig. 5;
- Fig. 7: eine weitere Teilansicht der Fahrpedaleinheit aus Fig. 5;
- Fig. 8a,b: eine Explosionsdarstellung der in Fig. 7 gezeigten Bauteile;
- Fig. 9: eine Schnittdarstellung eines dritten Ausführungsbeispiels der erfindungsgemäßen Fahrpedaleinheit;
- Fig. 10: eine weitere Schnittdarstellung der in Fig. 9 dargestellten Fahrpedaleinheit und
- Fig.11: eine Pedalkennlinie zur Verdeutlichung der Arbeitsweise aller ausführungsformen.

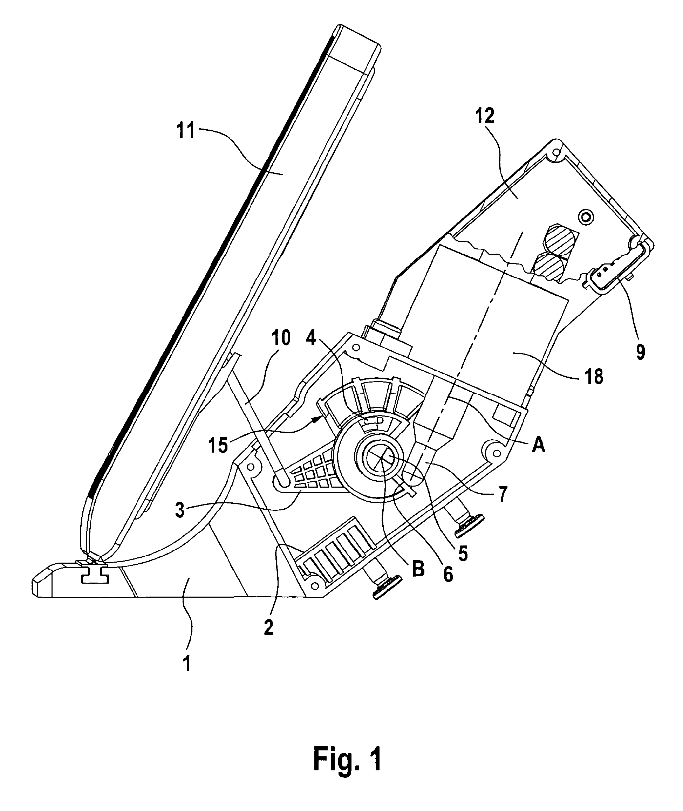

In Fig. 1 ist eine Fahrpedaleinheit 1 für Kraftfahrzeuge dargestellt. Wenn der Fahrzeugführer auf eine Pedalplatte 11 der Fahrpedaleinheit 1 tritt und sich eine durch seine entsprechende Fuß-Betätigungskraft herbeigeführte Lageänderung der Pedalplatte 11 gegenüber der Ausgangslage entgegen einer Rückstellkraft FRück einstellt, so führt dies zu einer Erhöhung der Antriebskraft des Antriebsmotors des Kraftfahrzeugs. Dabei ist es unerheblich, ob der Antriebsmotor des Kraftfahrzeugs durch einen Verbrennungsmotor oder einen bzw. mehrere Elektromotoren oder durch eine Kombination der genannten Motoren realisiert wird. Löst der Fahrzeugführer seinen Fuß von der Pedalplatte 11, so befördert eine Rückstellkraft F_{Rück} die Pedalplatte 11 in Richtung seiner Ausgangslage zurück. Diese Rückstellkraft F_{Rück} wird von einer hier nicht dargestellten Rückstellfeder erzeugt. Bei der in Fig. 1 dargestellten Fahrpedaleinheit kann bedarfsweise eine zusätzliche Rückstellkraft F_{Zusatz} auf die Pedalplatte 11 erzeugt werden. Der Fahrzeugführer erhält damit eine haptische Information. So kann beispielsweise zum ökonomischen und spritsparenden Betrieb des Kraftfahrzeugs angehalten werden, indem die zusätzliche Rückstellkraft F_{Zusatz} bei ineffizienter Motordrehzahl erhöht wird und damit das Pedalgefühl härter wird. Andererseits kann der maximale Hub S der Pedalplatte 11 begrenzt werden wie nachfolgend noch näher erläutert wird. Andere haptische Informationen, die dem Fahrzeugführer übermittelt werden können sind außerdem die Übermittlung sicherheitskritischer Informationen wie ein unzureichender Abstand zum vorausfahrenden Fahrzeug.

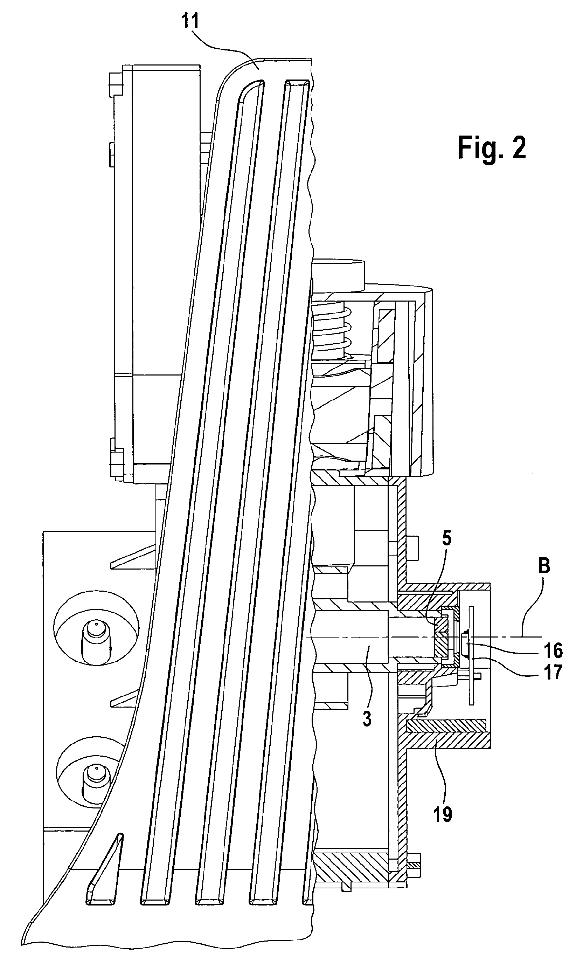

Wird die Pedalplatte 11 niedergedrückt, dreht sie sich um ihre Drehachse. Die Pedalplatte 11 betätigt ein Übertragungselement 10, das wiederum mit einer nockenartigen Kurvenscheibe 3 verbunden ist. Durch die Kraftübertragung von der Pedalplatte 11 über das Übertragungselement 10 auf die Kurvenscheibe 3 wird diese um eine Achse B gedreht. Ein elektromechanischer Aktuator, der im vorliegenden Ausführungsbeispiel als Hubmagnet 18 ausgebildet ist, greift ebenfalls an der nockenartigen Kurvenscheibe 3 an: Der Magnetstößel 7 des Hubmagneten 18 liegt auf einer Anlagefläche 6 der Kurvenscheibe 3 an und ist entlang einer Achse A vom Hubmagneten 18 bewegbar. Da der Magnetstößel 7 nur auf der Anlagefläche 6 anliegt kann der Hubmagnet 18 dabei nur eine Kraft in Richtung der Rückstellung der Pedalplatte 11 erzeugen. Eine stärkere Betätigung der Pedalplatte 11 als vom Fahrzeugführer mittels seiner Fußkraft eingestellt ist, kann der Hubmagnet 18 nicht erzeugen. Er wirkt also ausschließlich in Rückstellrichtung mit der zusätzlichen Rückstellkraft F_{Zusatz}. Bei der Betätigung der Pedalplatte 11 wird die Kurvenscheibe 3 gemeinsam mit einem Magneten 5 in eine Drehbewegung um die Achse B versetzt. Ein in Fig. 2 dargestellter Sensor 16, der mit einer Steuereinheit 17 verbunden ist, ermittelt die Position der Pedalplatte 11 mit Hilfe des Magneten 5, der sich gemeinsam mit Kurvenscheibe 3 bewegt. Wenn eine zusätzliche Rückstellkraft F_{Zusatz} erzeugt werden soll sendet eine weitere Steuereinheit 12 ein elektrisches Signal zum Hubmagneten 18. Der Hubmagnet 18 ist ein nichtkommutierter Direktantrieb mit einem begrenzten Hub S, der den Magnetstößel 7 und eine statische Spule zur Bereitstellung der Lorentz-Kraft aufweist. Der Hubmagnet 18 kann mit Hilfe elektrischer Signale der Steuereinheit 12 so angesteuert werden, dass die zusätzliche Rückstellkraft F_{Zusatz} als Vibration oder Kraftimpuls an der Pedalplatte 11 für den Fahrzeugführer spürbar ist. Abhängig von den eben genannten zahlreichen Funktionen der Kraftform der zusätzlichen Rückstellkraft F_{Zusatz} kann auch die Größe der zusätzlichen Rückstellkraft F_{Zusatz} eingestellt werden oder der maximale Hub S der Pedalplatte 11 begrenzt werden. Wie es aus der Fig. 1 ersichtlich ist, ist der maximale Hub S der Pedalplatte 11 erreicht, wenn die Kurvenscheibe 3 an einem Anschlag 2 anliegt. Bereits vor diesem maximal möglichen Hub S kann der Hub S der Pedalplatte 11 durch eine entsprechend große Rückstellkraft F_{Zusatz} des Hubmagneten 18 begrenzt werden. Der Fahrzeugführer spürt dann eine Kraftschwelle an der Pedalplatte 11, die nur mit größerem Kraftaufwand übertreten werden kann. Auf diese Weise wird der maximal mögliche Hub S der Pedalplatte 11 begrenzt. Diese Funktion kann dazu dienen, den Fahrzeugführer zu einer energiesparenden Fahrweise anzuleiten.

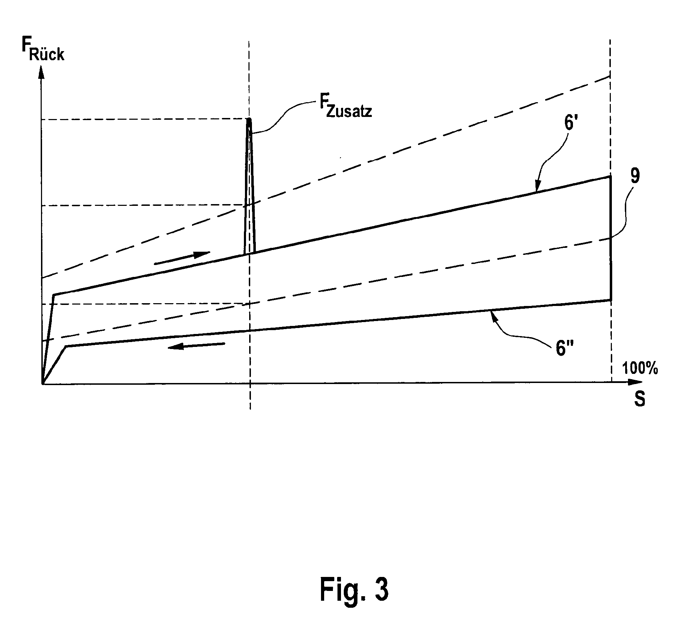

Die für eine Fahrpedaleinheit 1 notwendige Kennlinie wird nachfolgend anhand der Fig. 3 erläutert. Auf der Abszisse ist der Hub S der Pedalplatte 11 abgetragen, wobei der maximal mögliche Hub S, der durch den Kontakt zwischen der Kurvenscheibe 3 und der Anlagefläche 2 definiert ist, bei 100% auf der Abszisse liegt. Die Ordinate stellt die Rückstellkraft F_{Rück} bzw. die zusätzliche Rückstellkraft F_{Zusatz} an der Pedalplatte 11 dar. Um die Geschwindigkeit des Kraftfahrzeugs zu erhöhen, übt der Fahrzeugführer eine Kraft auf die Pedalplatte 11 aus. Mit zunehmendem Winkel, um den die Pedalplatte 11 ausgelenkt wird, erhöht sich die Geschwindigkeit des Kraftfahrzeugs. Um dem Fahrzeugführer das Gefühl zu vermitteln, dass er die Geschwindigkeit steuert, wird der Pedalplatte 11 die Rückstellkraft F_{Rück} gegen den Fuß des Fahrzeugführers mit steigendem Pedalwinkel bzw. mit steigendem Pedalhub erhöht. Diese Rückstellkraft F_{Rück} wird bei herkömmlichen Pedalanordnungen durch eine Rückholfeder und eine Hysterese-Feder erzeugt. Sind die Kraft, die durch den Fahrzeugführer auf die Pedalplatte 11 ausgeübt wird, und die Rückstellkraft F_{Rück}, die durch die Rückholfeder und die Hysterese-Feder erzeugt wird, im Gleichgewicht, so wird dem Fahrzeugführer insbesondere auf ebener Fahrbahn das Gefühl vermittelt, er bewegt sich mit gleichbleibender Geschwindigkeit vorwärts.

Die Kennlinie 6', 6" der Pedalplatte 11 zeigt den Verlauf der Rückstellkraft F_{Rück} in Abhängigkeit vom Pedalhub S. In Fig. 3 repräsentiert die hinlaufende Kennlinie 6' die Geschwindigkeitserhöhung. Die anfängliche Gegenkraft beim Pedalhub S gleich Null und die Steigung der hinlaufenden Kennlinie 6' sind bei herkömmlichen Pedalanordnungen durch die Auswahl der Rückholfeder und der Hysterese-Feder bestimmt. Will der Fahrzeugführer die Geschwindigkeit des Kraftfahrzeugs verringern, reduziert er die Kraft auf die Pedalplatte 11. Sobald sich die Richtung der Pedalauslenkung in Richtung abnehmendem Pedalhub S umkehrt, wird bei vorbekannten Systemen die Hysterese-Feder weggeschaltet, zum Beispiel durch Ausklinken der entsprechenden Feder. Die Rückstellkraft F_{Rück}, mit der die Pedalplatte 11 auf den Fuß des Fahrzeugführers wirkt, wird nun um den Betrag, der durch die Hysterese-Feder erzeugt wird, reduziert. Diese Verringerung der Rückstellkraft F_{Rück} bei Pedalwinkelumkehr wird durch die sogenannten Hysteresesprung 9 veranschaulicht. Die Gegenkraft der rücklaufende Kennlinie 6" wird nun einzig durch die vorhin erwähnte Rückholfeder aufgebracht. Der Fahrzeugführer verringert bei dem Wunsch, die Geschwindigkeit zu reduzieren, die Kraft auf die Pedalplatte 11. Die durch die Rückholfeder ausgeübte Rückstellkraft F_{Rück} bewirkt, dass die Pedalplatte 11 in Kontakt mit dem Fuß des Fahrzeugführers bleibt und dem Fahrzeugführer das Gefühl vermittelt wird, dass er das Fahrzeug aktiv in Richtung geringerer Geschwindigkeit steuert. Eine zusätzliche Rückstellkraft F_{Zusatz} ist in Fig. 3 beispielhaft als Kraftspitze dargestellt, die eine Kraftschwelle für den Fahrzeugführer beim Niederdrücken der Pedalplatte 11 bedeutet.

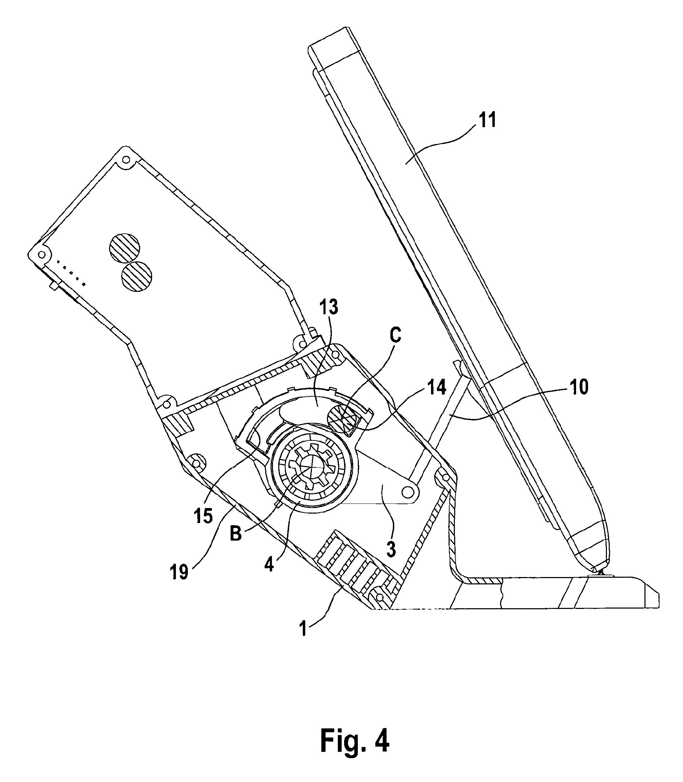

Bei der vorliegenden Fahrpedaleinheit 1 ist nun im Gegensatz zu den herkömmlichen Pedalanordnungen vorgesehen, dass Hysterese-Mittel die Hysterese der Pedalkennlinie erzeugen, wobei diese Hysterese unabhängig von der zusätzlichen Rückstellkraft F_{Zusatz} des Hubmagneten 18 ist. Die notwendige Hysterese wird durch die in Fig. 4 dargestellten Hysterese-Mittel erzeugt. Der Gedanke ist dabei, dass die Hysterese unabhängig von der zusätzlichen Rückstellkraft F_{Zusatz} des Hubmagneten 18 ist. Die Hysterese-Mittel werden in dem in Fig. 4 dargestellten Ausführungsbeispiel als ein Reibelement 13 und eine mit dem Reibelement 13 zusammenwirkende Reibfläche 15 ausgebildet. Die Reibfläche 15 ist mit der nockenartigen Kurvenscheibe 3 fest verbunden und befindet sich in radialer Richtung zur Drehachse B der Kurvenscheibe 3. Die Reibfläche 15 dreht sich durch die feste Verbindung mit der Kurvenscheibe 3 gemeinsam um die Drehachse B. Da die Kurvenscheibe 3 über das Übertragungselement 10 mit der Pedalplatte 11 verbunden ist, wird eine auf die Reibungsfläche 15 aufgebrachte Reibkraft auf die Bewegung der Pedalplatte 11 übertragen, d.h. eine derartige Reibkraft dämpft die Bewegung der Pedalplatte 11. Mit der Reibfläche 15 wirkt ein Reibelement 13 zusammen, das schwenkbar um einen Achsbolzen 14 gelagert ist. Die Drehachse C des Achsbolzens 14 ist parallel beabstandet zur Drehachse B der Kurvenscheibe 3 angeordnet. Der Achsbolzen 14 ist im Gehäuse 19 befestigt. Eine Torsionsfeder 4 drückt das Reibelement 13 gegen die Reibfläche 15 und erzeugt bei der Bewegung der Reibfläche 15, die sich gemeinsam mit der der Pedalplatte 11 verdreht, eine Reibkraft. Dadurch wird die Hysterese der Pedalkennlinie erzeugt. Im Vergleich der Fig. 1 und Fig. 4 wird deutlich, dass die Hysterese unabhängig von der zusätzlichen Rückstellkraft F_{Zusatz} des elektromechanischen Aktuators erzeugt wird: Die Reibfläche 15 und das Reibelement 13 zur Erzeugung der Hysterese sind nicht im Kraftfluss zwischen dem Hubmagneten 18 und der Kurvenscheibe 3 angeordnet, sondern parallel zu diesem Kraftfluss und sind daher unabhängig von der durch den Hubmagneten 18 erzeugten zusätzlichen Rückstellkraft F_{Zusatz}. Das Entscheidende dabei ist auch, dass die Hysterese konstant bleibt - unabhängig ob der Hubmagnet 18 angesteuert wird oder nicht. Dadurch vermittelt die Fahrpedaleinheit 1 dem Fahrzeugführer ein besseres Gefühl, wenn das Hystereseverhalten gleich bleibt unabhängig davon ob der Hubmagnet 18 aktiv ist oder nicht aktiviert wird.

Wie Fig. 1 weiter entnehmbar ist, ist die Torsionsfeder 4 in die Kurvenscheibe 3 eingehängt und wird durch eine Drehung der Kurvenscheibe 3 gespannt. Das andere Ende der Torsionsfeder 4 liegt an dem Reibelement 13 an und drückt es gegen die Reibfläche 15. Durch die Drehung der Kurvenscheibe 3 wird die Torsionsfeder 4 immer weiter gespannt und drückt das Reibelement 13 stärker gegen die Reibfläche 15. Ein Hysteresesprung zwischen hinlaufender und rücklaufender Kennlinie, wie er anhand von Fig. 3 erläutert wurde, entsteht dadurch, dass der Reibungsverlust in Betätigungsrichtung wirkt und daher beim Niederdrücken der Pedalplatte 11 zur Fußbetätigungskraft addiert wird, während beim Lösen der Pedalplatte 11 der Reibungsverlust gerade entgegenwirkt.

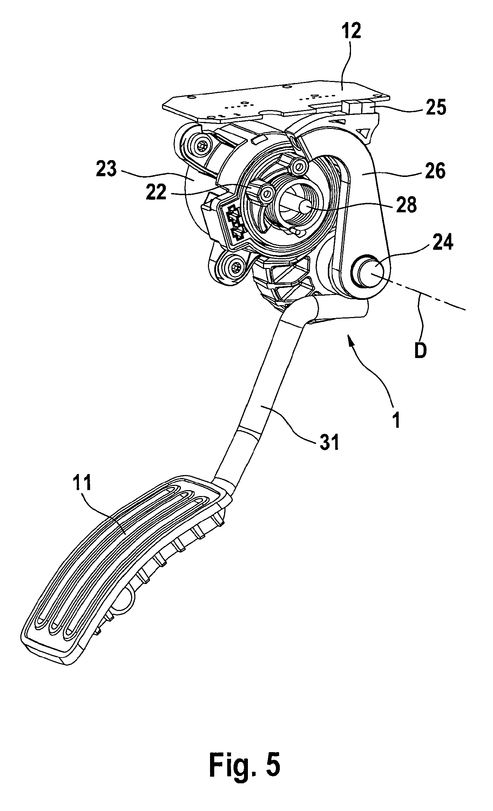

Anhand der Figuren 5 bis 8 sind die Hysterese-Mittel bei einer hängenden Fahrpedaleinheit 1 erläutert. Gleiche Elemente wie bei dem anhand der Fig. 1 bis 4 dargestellten stehenden Fahrpedaleinheit sind mit denselben Bezugszeichen bezeichnet. Die in Fig. 5 dargestellte Fahrpedaleinheit 1 ist ebenfalls in der Lage, eine zusätzliche Rückstellkraft F_{Zusatz} zu erzeugen, um dem Fahrzeugführer haptische Informationen zu übermitteln. Um dem Fahrzeugführer eine derartige haptische Information zu übermitteln, wird ein elektrisches Signal von einer externen Steuereinheit innerhalb des Kraftfahrzeugs von einer Steuereinheit 12 der Fahrpedaleinheit 1 umgesetzt.

Die Pedalplatte 11 ist bei dem hängenden Pedal mit einem Pedalhebel 31 verbunden. Wird die Pedalplatte 11 niedergedrückt, dreht sie einen mit der Pedalplatte 11 verbundenen Hebelarm 26 um seine Drehachse D. Die Drehachse D wird durch die Hauptwelle 24 gebildet. Dadurch wird der Hebel 26 gemeinsam mit einem Magneten 25 in eine Drehbewegung um die Drehachse D versetzt. Ein Sensor, der mit der Steuereinheit 12 verbunden ist, ermittelt die Position der Pedalplatte 11 mit Hilfe des Magneten 25, der sich gemeinsam mit dem Hebelarm 26 verdreht. Der Hebelarm 26 liegt an einem Auflagepin 22 an, dessen Position in Fig. 5 doppelt dargestellt ist, um die Bewegung der Pedaleinheit 1 zu verdeutlichen. Wenn die Fahrpedaleinheit 1 eine zusätzliche Rückstellkraft F_{Zusatz} erzeugen soll, dann steuert die Steuereinheit 12 einen Elektromotor 23 an und der Auflagepin 22 vollzieht einen Teil der Bewegung gemeinsam mit einer Motorwelle 28 des Elektromotors 23. Wenn der Elektromotor 23 betrieben wird, beginnt sich die Motorwelle 28 zu drehen und durch die Bewegung des Auflagepins 22 wird der Hebelarm 26 bewegt. Auf diese Weise, verstärkt sich die an der Pedalplatte 11 für den Fahrzeugführer spürbare Rückstellkraft. In Abhängigkeit der Vielzahl an Funktionen der Fahrpedaleinheit 1 kann diese zusätzliche Rückstellkraft modifiziert werden und der Elektromotor 23 kann warnende Vibrationen oder rechteckförmige Kraftimpulse erzeugen. Besonders wirksam haben sich dabei zwei aufeinander folgende rechteckförmige Kraftimpulse herausgestellt.

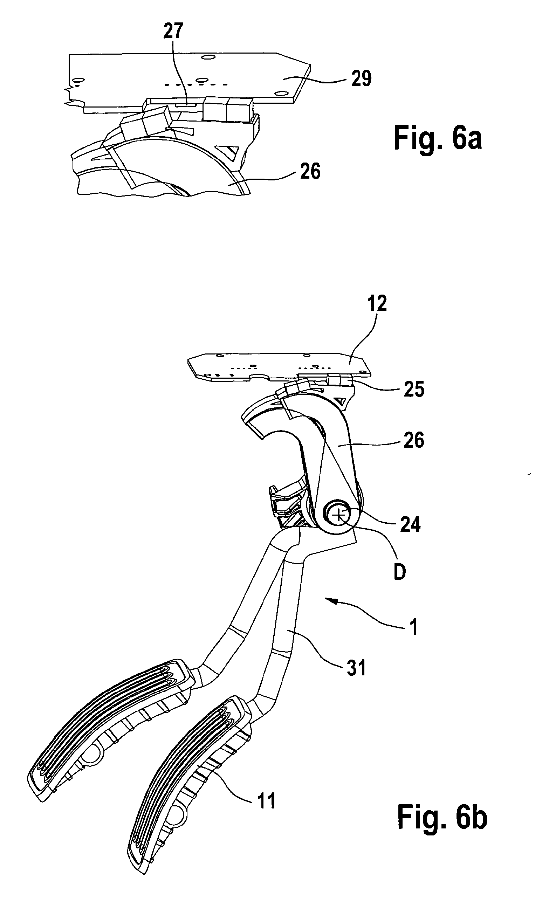

In den Fig. 6a und 6b sind wiederum zwei Betätigungsstellungen des Fahrpedals 1 dargestellt. Zur Erfassung der Pedalplattenstellung trägt der Hebelarm 26 einen Magneten 25, dessen Bewegung von einem Sensor 27 erfasst wird. Der Magnet 25 wirkt mit dem als Magnetfeldsensor ausgebildeten Sensor 27 zusammen. Als Magnetfeldsensoren kommen ein Hall-Element oder ein magnetoresistives Element in Frage. Der Sensor 27 hat aus Gründen der Redundanz zwei Erfassungselemente. Wie es aus den Fig. 6a und 6b entnehmbar ist, ist der Sensor 27 in die Steuereinheit 12 integriert, das heißt, es wird keine gesonderte Signalübertragung zwischen der Steuereinheit 12 und dem Sensor 27 benötigt, weil der Sensor 27 bereits auf der Leiterplatte 29 der Steuereinheit 12 angeordnet ist.

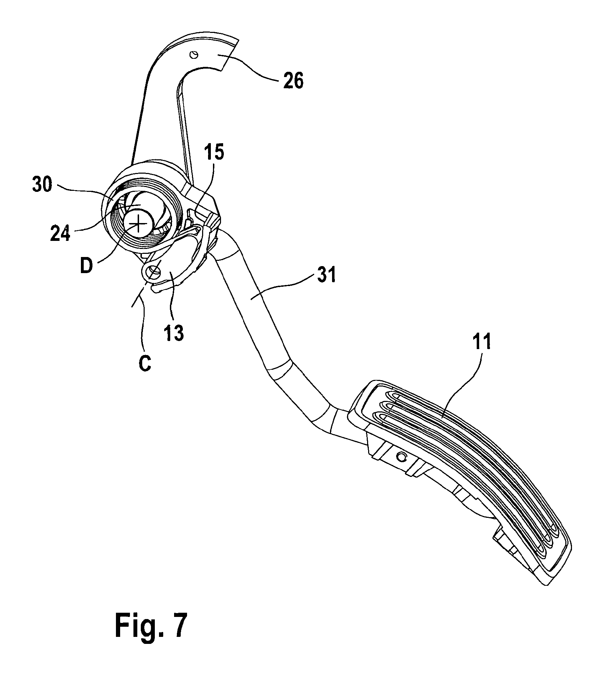

Die Mittel zur Erzeugung einer Hysterese, die unabhängig vom Elektromotor 23 aufgebracht wird, sind in Fig. 7 dargestellt: Mit dem Hebelarm 26 ist eine Reibfläche 15 fest verbunden. Das Reibelement 13, das mit der Reibfläche 15 zusammenwirkt, ist schwenkbar um eine Achse C gelagert. In der Achse C wird ein Zapfen angeordnet, der in einem Gehäuse befestigt ist und das Reibelement 13 lagert. Das Reibelement 13 wird durch eine Feder 30 gegen die Reibfläche 15 vorgespannt. Da die Reibfläche 15 mit dem Hebelarm fest verbunden ist, wirkt eine Reibkraft auf die Reibfläche 15 ebenfalls auf den Hebelarm und damit auf die Pedalplatte 11. Wie bereits anhand des Ausführungsbeispiels der Fig. 1 bis 4 erläutert, ist auch beim Ausführungsbeispiel der Fig. 5 bis 8 die Mittel zur Erzeugung der Hysterese aus dem Kraftfluss des Elektromotors 23 über die nicht dargestellte Torsionsfeder zum Auflagepin 22 entkoppelt. Die Erzeugungsmittel in Form der Reibfläche 15 und des Reibelements 13 sind vielmehr parallel zu diesem Kraftfluss geschaltet.

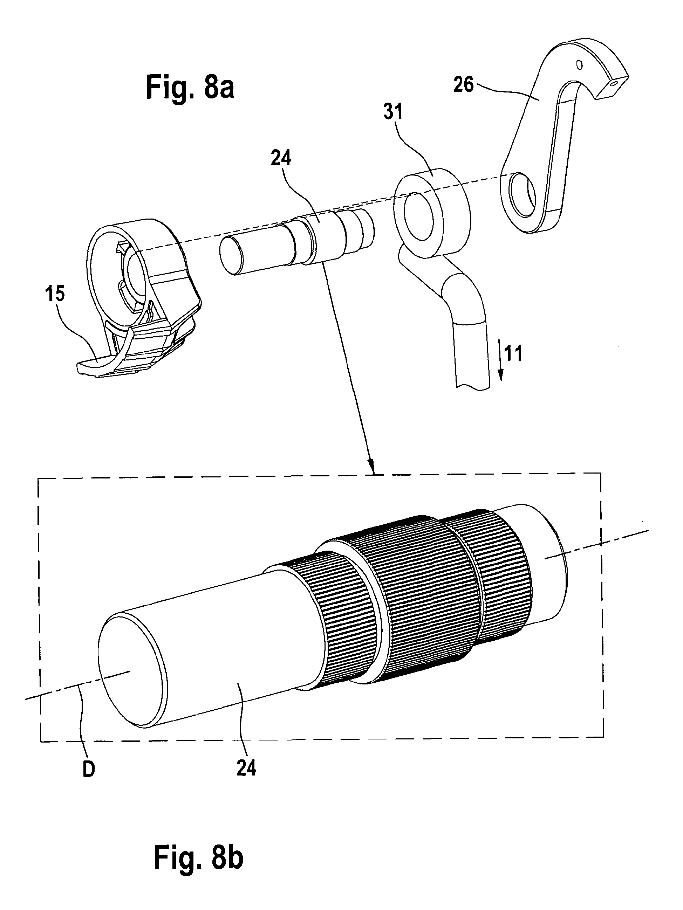

In Fig. 8a und 8b ist ein wichtiger Montageschritt der Fahrpedaleinheit 1 dargestellt: Der Hebelarm 26 wird auf die Hauptwelle 24 gepresst - gemeinsam mit dem Pedalhebel 31 und dem Element, das die Reibfläche 15 aufweist. Die Hauptwelle 24 weist zum festen Sitz der aufgepressten Teile eine aufgeraute Oberfläche auf. Die aufgeraute Oberfläche besteht dabei aus kleinen Längsnuten, die sich parallel zur Längsachse D erstrecken. Dadurch können sich die eben genannten Bauteile zueinander nicht mehr verdrehen und durch diese Montage können besonders kleine Toleranzen realisiert werden.

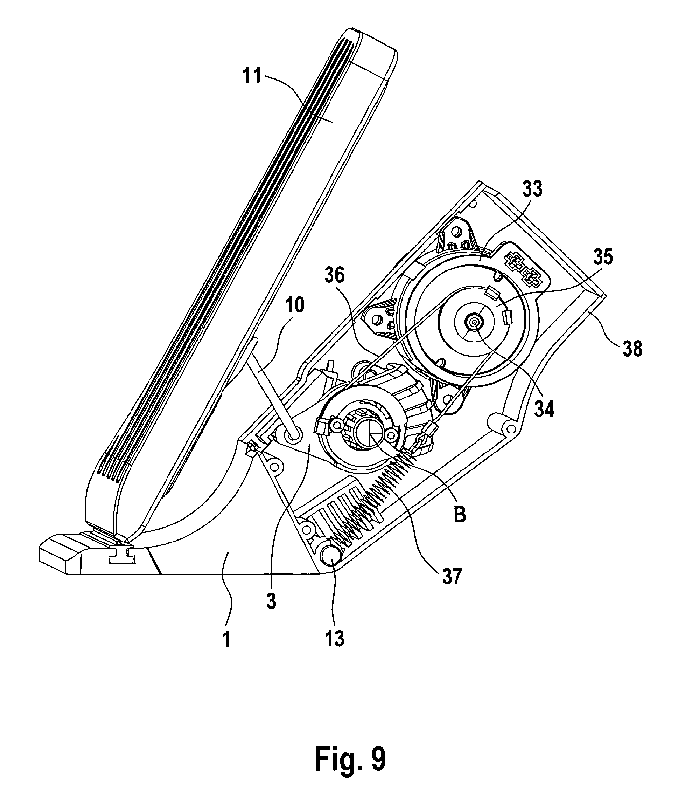

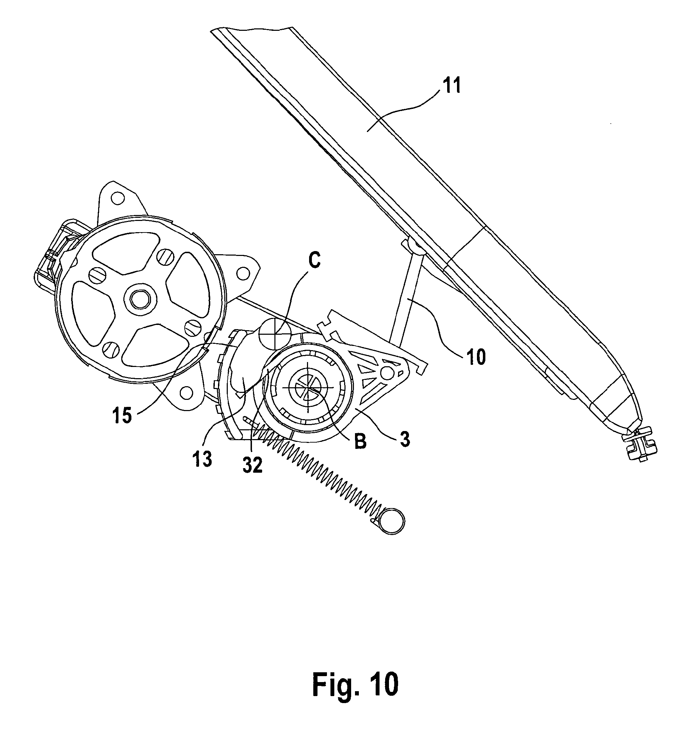

In den Figuren 9 und 10 ist eine weitere Ausführungsform der Fahrpedaleinheit 1 dargestellt. Wiederum sind die Bauteile, die bereits bei den vorherigen Ausführungsformen beschrieben wurden, mit denselben Bezugszeichen versehen. Die Fahrpedaleinheit 1 arbeitet hierbei in folgender Form: Wird die Pedalplatte 11 nieder gedrückt, wird auch das Übertragungselement 10 betätigt und die nockenartige Kurvenscheibe 3 beginnt sich zu um ihre Drehachse B zu drehen. Zur Erzeugung einer zusätzlichen Rückstellkraft F_{Zusatz} wird ein Elektromotor 33 angesteuert. Auf die Motorwelle 34 des Elektromotors 33 ist eine Scheibe 35 aufgesteckt, die an ihrer äußeren Umfangsfläche eine Nut aufweist, in der ein Band 36 geführt wird. Das Band 36 ist einerseits an der Kurvenscheibe 3 und andererseits über eine Feder 37 am Gehäuse 38 befestigt. Durch das Niederdrücken der Pedalplatte 11 wird die Kurvenscheibe 3 verdreht und beginnt an dem Band 36 zu ziehen, das mit Hilfe der Feder 37 auf der Motorwelle 34 gespannt ist. Durch eine Ansteuerung des Elektromotors 33 wird an dem Band 36 gezogen und eine Kraft auf die Kurvenscheibe 3 in der Weise übertragen, dass das Übertragungselement 10 und die Pedalplatte 11 in ihre Ausgangsposition zurück befördert werden. Mit anderen Worten ist eine zusätzliche Rückstellkraft F_{Zusatz} einstellbar. Wie bereits erwähnt, kann diese zusätzliche Rückstellkraft F_{Zusatz} in Form von Vibrationen oder rechteckförmigen Kraftimpulsen erzeugt werden. Außerdem kann der maximal mögliche Hub S der Pedalplatte 11 durch eine geeignete zusätzliche Rückstellkraft F_{Rück} begrenzt werden.

Die Mittel zur Erzeugung einer von der Krafterzeugung des Elektromotors 33 unabhängigen Hysterese werden wieder als Reibelement 13 und eine mit dem Reibelement 13 zusammenwirkende Reibfläche 15 ausgebildet. Die Reibfläche 15 ist mit der nockenartigen Kurvenscheibe 3 fest verbunden. Die Reibfläche 15 dreht sich durch die feste Verbindung mit der Kurvenscheibe 3 gemeinsam um die Drehachse B. Mit der Reibfläche 15 wirkt ein Reibelement 13 zusammen, das schwenkbar um die Achse C gelagert ist. Die Drehachse C ist parallel beabstandet zur Drehachse B der Kurvenscheibe 3 angeordnet. Da die Kurvenscheibe 3 über das Übertragungselement 10 mit der Pedalplatte 11 verbunden ist, wird eine auf die Reibungsfläche 15 aufgebrachte Reibkraft auf die Bewegung der Pedalplatte 11 übertragen, d.h. eine derartige Reibkraft dämpft die Bewegung der Pedalplatte 11. Eine Torsionsfeder 32 drückt das Reibelement 13 gegen die Reibfläche 15 und erzeugt bei der Bewegung der Reibfläche 15, die sich gemeinsam mit der der Pedalplatte 11 verdreht, eine Reibkraft.

Wie bereits erwähnt, ist das Entscheidende, dass die Hysterese unabhängig von der zusätzlichen Rückstellkraft F_{Zusatz} des Elektromotors 33 erzeugt wird. Dies wird dadurch erreicht, dass die Reibfläche 15 und das Reibelement 13 aus dem Kraftfluss zwischen dem Elektromotor 33 und der Pedalplatte 11 entkoppelt werden. Stattdessen sind die Reibfläche 15 und das Reibelement 13 parallel zu diesem Kraftfluss angeordnet und daher unabhängig von der durch den Elektromotor 33 erzeugten zusätzlichen Rückstellkraft F_{Zusatz}. Entscheidend ist auch, dass die Hysterese konstant bleibt. Damit ist gemeint, dass die Hysterese eine konstante Kennlinie hat unabhängig ob der Elektromotor 33 angesteuert wird oder nicht. Das Hystereseverhalten bleibt gleich unabhängig davon ob der Elektromotor 33 aktiv ist oder nicht aktiviert wird.

Wie bereits anhand der Fig. 1 verdeutlicht wurde, ist die Torsionsfeder 32 in die Kurvenscheibe 3 eingehängt und wird durch eine Drehung der Kurvenscheibe 3 gespannt. Das andere Ende der Torsionsfeder 32 liegt an dem Reibelement 13 an und drückt es gegen die Reibfläche 15. Durch die Drehung der Kurvenscheibe 3 wird die Torsionsfeder 32 immer weiter gespannt und drückt das Reibelement 13 stärker gegen die Reibfläche 15.

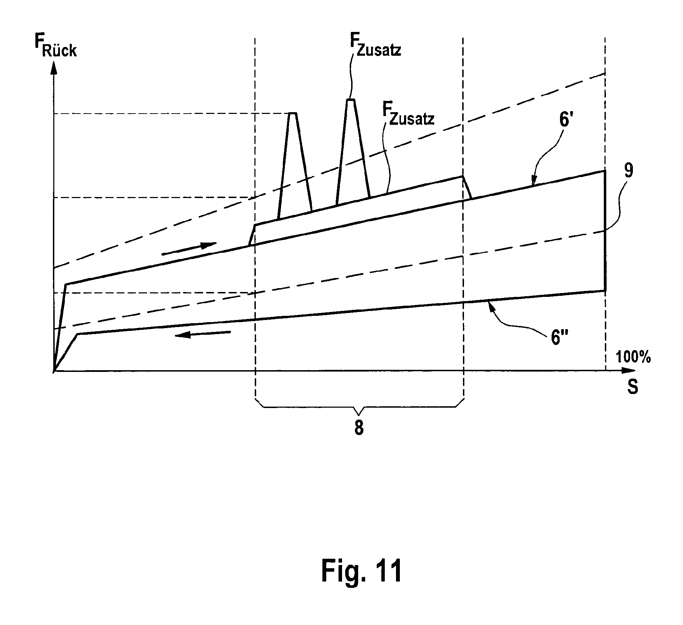

Anhand der Fig. 11 wird noch einmal die Funktionsweise der beschriebenen Ausführungsbeispiele erläutert. In der in Fig. 11 dargestellten Pedalkennlinie ist die Rückstellkraft F_{Rück} gegenüber dem Hub S der Pedalplatte 11 abgetragen. Die hinlaufende, passive Pedalkennlinie 6', der Hysteresesprung 9 sowie die rücklaufende Pedalkennlinie 6" wurden bereits anhand von Fig. 3 erläutert. Durch die beschriebenen Fahrpedaleinheiten 1 kann eine zusätzliche Rückstellkraft F_{Rück} erzeugt werden, die zur Informationsübermittlung an den Fahrzeugführer dient oder den Fahrzeugführer zu einer ökonomischen Fahrweise anleitet. Der Bereich, in dem die elektromechanischen Aktuatoren 18, 23, 33 aktiv sind und eine zusätzliche Rückstellkraft F_{Zusatz} erzeugen, ist mit dem Bezugszeichen 8 versehen. Entscheidend ist es nun, dass dieser Aktivbereich über die gesamte Abszisse verschoben werden kann. Das heißt, bei jedem Hub S der Pedalplatte zwischen 0% und 100% kann eine zusätzliche Rückstellkraft F_{Zusatz} in Form von Vibrationen, Kraftschwellen oder rechteckförmigen Kraftimpulsen erzeugt werden. Eine Begrenzung des Hubs S durch eine Kraftschwelle ist ebenfalls bei jeder Stellung der Pedalplatte 11 möglich.

### Bezugszeichenliste

- 1: Fahrpedaleinheit
- 2: Anlagefläche
- 3: nockenartige Kurvenscheibe
- 4: Torsionsfeder
- 5: Magnet
- 6', 6": passive Pedalkennlinie
- 7: Magnetstößel
- 8: Aktivbereich
- 9: Hysteresprung
- 10: Übertragungselement
- 11: Pedalplatte
- 12: Steuereinheit
- 13: Reib-Element
- 14: Achsbolzen
- 15: Reibfläche
- 16: Sensor
- 17: Steuereinheit
- 18: Hubmagnet
- 19: Gehäuse
- 20:
- 21:
- 22: Auflagepin
- 23: Elektromotor
- 24: Hauptwelle
- 25: Magnet
- 26: Hebelarm
- 27: Sensor
- 28: Motorwelle
- 29: Leiterplatte
- 30: Feder
- 31: Pedalhebel
- 32: Torsionsfeder
- 33: Elektromotor
- 34: Motorwelle
- 35: Scheibe
- 36: Band
- 37: Feder
- 38: Gehäuse
- A: Achse Hubmagnet 18
- B: Drehachse Kurvenscheibe 2
- C: Drehachse Reib-Element 13
- D: Drehachse Hebelarm 26

## Patentansprüche

1. Fahrpedaleinheit (1) für Kraftfahrzeuge, wobei eine durch eine entsprechende Betätigungskraft herbeigeführ-te Lageänderung der Pedalplatte (11) gegenüber seiner Ausgangslage entgegen einer Rückstellkraft einer Rück-stellfeder (16) zu einer Erhöhung der Antriebskraft des Motors führt und bei nachlassender Betätigungskraft die Rückstellkraft der Rückstellfeder (16) die Pedalplatte (11) in Richtung seiner Ausgangslage zurückbefördert, wobei ein fremdansteuerbarer elektromechanischer Aktua-tor (18, 23, 33) derart angeordnet ist, dass eine zu-sätzliche Rückstellkraft (F_{Zusatz}) auf die Pedalplatte (11) einstellbar ist, **dadurch gekennzeichnet, dass** Hys-terese-Mittel (13, 15) zur Erzeugung einer Hysterese der Pedalkennlinie vorgesehen sind, wobei diese Hyste-rese unabhängig von der zusätzlichen Rückstellkraft (F_{Zusatz}) des elektromechanischen Aktuators (18, 23, 33) ist.

2. Fahrpedaleinheit (1) nach Anspruch 1, dadurch gekenn-zeichnet, dass die Hysterese-Mittel (13, 15) als Reib-Element (13) und mit dem Reib-Element (13) zusammenwir-kender Reibfläche (15) ausgebildet sind, wobei die Reibfläche (13) mit der Pedalplatte (11) verbunden ist, während das Reib-Element (15) aus dem Kraftfluss zwi-schen der Pedalplatte (11) und dem elektromechanischen Aktuator (18, 23, 33) entkoppelt ist.

3. Fahrpedaleinheit (1) nach Anspruch 1 oder 2, **dadurch gekennzeichnet, dass** das Reibelement (13) um eine Achse (C) beweglich angeordnet ist, die sich parallel zur Achse (B) der Reibfläche (15) befindet.

4. Fahrpedaleinheit (1) nach Anspruch 3, dadurch gekenn-zeichnet, dass das Reibelement (13) schwenkbar um einen Achsbolzen (14) angeordnet ist, wobei der Achsbolzen (14) in einem Gehäuse (16) der Fahrpedaleinheit (1) be-festigt ist.

5. Fahrpedaleinheit (1) nach einem der vorhergehenden An-sprüche, **dadurch gekennzeichnet, dass** der elektromecha-nische Aktuator als linearer Hubmagnet (18) ausgebildet ist, dessen Stößel (7) auf einer nockenartigen Kurven-scheibe (3) aufliegt, wobei die Kurvenscheibe (3) mit-tels eine Übertragungselements (10) von der Pedalplatte (11) betätigbar ist.

6. Fahrpedaleinheit (1) nach Anspruch 5, dadurch gekenn-zeichnet, dass die nockenartige Kurvenscheibe (3) min-destens einen Magneten (5) trägt, dessen Bewegung von einem Sensor (16) ermittelbar ist.

7. Fahrpedaleinheit (1) nach einem der Ansprüche 2 bis 4, **dadurch gekennzeichnet, dass** der elektromechanische Ak-tuator als regelbarer Elektromotor (23) ausgebildet ist, der eine Drehfeder (27) gegen einen Auflagepin (22) vorspannt, wobei ein mit der Pedalplatte (11) verbundener Hebelarm (26) an dem Auflagepin (22) anliegt.

8. Fahrpedaleinheit (1) nach Anspruch 7, **dadurch gekennzeichnet, dass** der Hebelarm (26) mindestens einen Magneten (25) trägt, dessen Bewegung von einem Sensor (27) ermittelbar ist.

9. Fahrpedaleinheit (1) nach einem der Ansprüche 2 bis 4, **dadurch gekennzeichnet, dass** der elektromechanische Aktuator als reversibler Elektromotor (33) ausgebildet ist, auf dessen Motorwelle (34) ein vorgespanntes Band (36) liegt, das einerseits über eine vorgespannte Feder (47) mit einem Gehäuse (38) der Fahrpedaleinheit (1) und andererseits mit einer Kurvenscheibe (3) verbunden ist, wobei die Kurvenscheibe (3) mittels eine Übertragungselements (10) von der Pedalplatte (11) betätigbar ist.

10. Fahrpedaleinheit (1) nach einem der vorhergehenden Patentansprüche, **dadurch gekennzeichnet, dass** die zusätzliche Rückstellkraft (F_{Zusatz}) den maximalen Hub (S) der Pedalplatte (11) begrenzt, Kraftimpulse oder Vibrationen auf die Pedalplatte (11) erzeugt.

## Claims

1. An accelerator pedal unit (1) for motor vehicles, wherein a change in position of the pedal plate (11) with respect to an initial position thereof and against a restoring force of a restoring spring (16), said change being brought about by a corresponding actuating force, leads to an increase in the driving force of the engine, and with a decrease in the actuating force the restoring force of the restoring spring (16) transfers the pedal plate (11) back in the direction of the initial position thereof, wherein an electromechanical actuator (18, 23, 33), which can be externally activated, is arranged such that an additional restoring force (F_{Zusatz}) can be set which acts on the pedal plate (11), **characterized in that** hysteresis means (13, 15) are provided for generating a hysteresis of the pedal characteristic curve, wherein said hysteresis is independent of the additional restoring force (F_{Zusatz}) of the electromechanical actuator (18, 23, 33).

2. The accelerator pedal unit (1) according to claim 1, **characterized in that** the hysteresis means (13, 15) are designed as a friction element (13) and a friction surface (15) cooperating with the friction element (13), wherein the friction surface (13) is connected to the pedal plate (11) while the friction element (15) is decoupled from the force flow between the pedal plate (11) and the electromechanical actuator (18, 23, 33).

3. The accelerator pedal unit (1) according to claim 1 or 2, **characterized in that** the friction element (13) is arranged to be able to move around an axis (C) extending in parallel to the axis (B) of the friction surface (15).

4. The accelerator pedal unit (1) according to claim 3, **characterized in that** the friction element (13) is arranged so as to be able to be pivoted about an axle bolt (14), wherein said axle bolt (14) is fastened in a housing (16) of the accelerator pedal unit (1).

5. The accelerator pedal unit (1) according to any one of the preceding claims, **characterized in that** the electromechanical actuator is designed as a linear lifting magnet (18), the plunger (7) of which rests on a cam-like disk (3), wherein the cam disk (3) can be actuated from the pedal plate (11) by means of a transfer element (10).

6. The accelerator pedal unit (1) according to claim 5, **characterized in that** the cam-like disk (3) supports at least one magnet (5), the movement of which can be determined by a sensor (16).

7. The accelerator pedal unit (1) according to any one of claims 2 to 4, **characterized in that** the electromechanical actuator is designed as a controllable electric motor (23), which preloads a torsion spring (27) against a supporting pin (22), wherein a lever arm (26) connected to the pedal plate (11) rests against the supporting pin (22).

8. The accelerator pedal unit (1) according to claim 7, **characterized in that** the lever arm (26) supports at least one magnet (25), the movement of which can be determined by a sensor (27).

9. The accelerator pedal unit (1) according to any one of the preceding claims 2 to 4, **characterized in that** the electromechanical actuator is designed as a reversible electric motor (33), the motor shaft (34) of which supports a preloaded belt (36), which is connected to a housing (38) of the accelerator pedal unit (1) via a preloaded spring (47) on the one hand and to a cam disk (3) on the other hand, wherein the cam disk (3) can be actuated from the pedal plate (11) by means of a transfer element (10).

10. The accelerator pedal unit (1) according to any one of the preceding patent claims, **characterized in that** the additional restoring force (F_{Zusatz}) restricts the maximum stroke (S) of the pedal plate (11), generates force impulses or vibrations acting on the pedal plate (11).

## Revendications

1. Unité de pédale d'accélérateur (1) pour véhicules automobiles, une variation de position du patin de pédale (11), due à une force d'actionnement correspondante, par rapport à sa position initiale contre une force de rappel d'un ressort de rappel (16) conduisant à une augmentation de la force d'entraînement du moteur et, lorsque la force d'actionnement diminue, la force de rappel du ressort de rappel (16) ramenant en arrière le patin de pédale (11) en direction de sa position initiale, un actionneur (18, 23, 33) électromécanique pouvant être commandé par des moyens extérieurs étant disposé de telle sorte qu'une force de rappel supplémentaire (F_{Suppl}) sur le patin de pédale (11) peut être réglée, **caractérisée en ce que** des moyens d'hystérésis (13, 15) sont prévus pour la production d'une hystérésis de la courbe caractéristique de pédale, cette hystérésis étant indépendante de la force de rappel supplémentaire (F_{Suppl}) de l'actionneur (18, 23, 33) électromécanique.

2. Unité de pédale d'accélérateur (1) selon la revendication 1, **caractérisée en ce que** les moyens d'hystérésis (13, 15) sont constitués en tant qu'élément de friction (13) et en tant que surface de friction (15) coopérant avec l'élément de friction (13), la surface de friction (15) étant raccordée au patin de pédale (11), tandis que l'élément de friction (13) est découplé du flux de force entre le patin de pédale (11) et l'actionneur (18, 23, 33) électromécanique.

3. Unité de pédale d'accélérateur (1) selon la revendication 1 ou 2, **caractérisée en ce que** l'élément de friction (13) est disposé de façon mobile autour d'un axe (C) qui est parallèle à l'axe (B) de la surface de friction (15).

4. Unité de pédale d'accélérateur (1) selon la revendication 3, **caractérisée en ce que** l'élément de friction (13) est disposé de façon pivotante autour d'un boulon d'axe (14), le boulon d'axe (14) étant fixé dans un boîtier (16) de l'unité de pédale d'accélérateur (1).

5. Unité de pédale d'accélérateur (1) selon une des revendications précédentes, **caractérisée en ce que** l'actionneur électromécanique est constitué en tant qu'aimant de levage (18) linéaire dont le poussoir (7) repose sur un disque came (3) de type came, le disque came (3) pouvant être actionné par le patin de pédale (11) au moyen d'un élément de transmission (10).

6. Unité de pédale d'accélérateur (1) selon la revendication 5, **caractérisée en ce que** le disque came (3) de type came porte au moins un aimant (5) dont le déplacement peut être déterminé par un capteur (16).

7. Unité de pédale d'accélérateur (1) selon une des revendications 2 à 4, **caractérisée en ce que** l'actionneur électromécanique est constitué en tant que moteur électrique (23) pouvant être régulé qui pré-tend un ressort de torsion (27) contre une broche d'appui (22), un bras de levier (26) raccordé au patin de pédale (11) reposant sur la broche d'appui (22).

8. Unité de pédale d'accélérateur (1) selon la revendication 7, **caractérisée en ce que** le bras de levier (26) porte au moins un aimant (25) dont le déplacement peut être déterminé par un capteur (27).

9. Unité de pédale d'accélérateur (1) selon une des revendications 2 à 4, **caractérisée en ce que** l'actionneur électromécanique est constitué en tant que moteur électrique (33) réversible sur l'arbre de moteur (34) duquel repose une bande (36) pré-tendue qui est raccordée d'une part à un boîtier (38) de l'unité de pédale d'accélérateur (1) par le biais d'un ressort (47) pré-tendu et d'autre part à un disque came (3), le disque came (3) pouvant être actionné par le patin de pédale (11) au moyen d'un élément de transmission (10).

10. Unité de pédale d'accélérateur (1) selon une des revendications précédentes, **caractérisée en ce que** la force de rappel supplémentaire (F_{Suppl}) limite la course maximale (S) du patin de pédale (11), produit des impulsions de force ou des vibrations sur le patin de pédale (11).
